(19) Europäisches Patentamt
European Patent Office
Office européen des brevets

(11) EP 4 648 466 A1

(12) EUROPEAN PATENT APPLICATION

(43) Date of publication:
12.11.2025 Bulletin 2025/46

(51) International Patent Classification (IPC):
H04W 24/06 (2009.01)

(21) Application number: 25174800.0

(22) Date of filing: 07.05.2025

(52) Cooperative Patent Classification (CPC):
H04W 24/06

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 07.05.2024 US 202418657007

(71) Applicant: Viavi Solutions Inc.
Chandler, AZ 85286 (US)

(72) Inventors:
• IHALAGE, Achintha
  Chandler, AZ 85286 (US)
• ELSHIMI, Adam
  London, W10 5UB (GB)
• TAHERI, Sayed
  Stockport, SK4 2DG (GB)
• POZUELO, Agustín Ferrín
  Dublin, A96H4F1 (IE)

(74) Representative: Murgitroyd & Company
165-169 Scotland Street
Glasgow G5 8PL (GB)

(54) **ENERGY SAVINGS PREDICTION USING MODELS THAT ARE TRAINED USING RADIO ACCESS NETWORK INTELLIGENT CONTROLLER SIMULATION DATA**

(57) In some implementations, a network test device may obtain a labeled dataset based on a radio access network intelligent controller (RIC) test simulation. The network test device may generate an artificial intelligence or machine learning (AI/ML) model that is trained using the labeled dataset. The network test device may receive, via a user interface, a network configuration associated with a user application deployed on an RIC. The network test device may predict, using the AI/ML model running on the network test device, a key performance indicator (KPI) based on the network configuration. The network test device may provide, via the user interface, an indication of the KPI.

FIG. 5

**Description**

BACKGROUND

A network test device may be used by network equipment manufacturers for function, system integration, capacity, and stress testing and emulation of a plurality of mobile devices, across multiple cells, to set up and test network nodes, such as Fourth Generation (4G) and Fifth Generation (5G) network nodes. A network test device may deliver voice, data, realistic mobility models, and 4G/5G core emulation, thereby providing a comprehensive validation solution. A network test device may ensure that users in a network are obtaining adequate quality of service. A network test device may ensure that the network is satisfying latency and round-trip time requirements for voice and time-critical applications.

SUMMARY

According to an aspect, there is provided a method, comprising:

obtaining, by a network test device, a labeled dataset based on a radio access network intelligent controller (RIC) test simulation;
generating, by the network test device, an artificial intelligence or machine learning (AI/ML) model that is trained using the labeled dataset;
receiving, via a user interface of the network test device, a network configuration associated with a user application deployed on an RIC;
predicting, using the AI/ML model running on the network test device, a key performance indicator (KPI) based on the network configuration; and
providing, via the user interface of the network test device, an indication of the KPI.

In one embodiment, obtaining the labeled dataset comprises:

obtaining, by the network test device, a reference configuration file that indicates a network topology and user equipment (UE) groups;
setting, by the network test device, a simulation length and an aggregation level;
determining, by the network test device, a baseline configuration file that is based on the reference configuration file, wherein the reference configuration file includes one or more of an updated network topology or updated UE groups based on a randomization of parameters;
performing, by the network test device, an RIC simulation using the baseline configuration file to obtain a baseline KPI and a list of available cells;
updating, by the network test device, an RIC action by randomly shutting down cells, in the list of available cells, to create a configuration file with the RIC action; and
obtaining, by the network test device, the labeled dataset based on an RIC test of the configuration file with the RIC action.

In one embodiment:

the network topology includes a plurality of parameters associated with one or more of: a number of sites, an area-to-number of-sites ratio, a number of buildings, or a building density; and
the UE groups include a plurality of parameters associated with one or more of: a seed value, a number-of-UEs-to-number-of-sites ratio, a target downlink throughput, an average time between calls, or an average call duration.

In one embodiment, obtaining the labeled dataset is based on performing parallel RIC simulations of distinct configuration files with different RIC actions using multiple containers.

In one embodiment:

the RIC test produces one or more of a UE report, a cell report, or an events report which are used to obtain the labeled dataset,
the labeled dataset includes the configuration file with the RIC action and a KPI associated with the RIC action,
the configuration file with the RIC action is associated with a randomized network topology, and
the KPI is associated with one of: an energy consumption, a downlink throughput, a quality of service, or an energy efficiency.

In one embodiment, the method further comprises:

determining, using the AI/ML model running on the network test device, one or more RIC actions that would result in energy saving; and
providing, via the user interface of the network test device, an indication of the one or more RIC actions.

In one embodiment:

the AI/ML model is a trained surrogate model that attempts to emulate an RIC testing that produces actual RIC test simulations,
the trained surrogate model is used to predict the KPI, and
the KPI is associated with a prediction of energy savings potential associated with the user application.

In one embodiment:

the AI/ML model is associated with a graph neural network (GNN),
a node of a network graph corresponds to a cell,
an edge of the network graph corresponds to corresponding cells depending on a proximity between the cells, and
the node is associated with a node attribute.

In one embodiment the node attribute is based on baseline per cell KPIs from a baseline cell report, baseline overall KPIs from a KPI calculator, and an RIC action mask per cell.

In one embodiment:

the network graph is an input to the GNN,
the GNN includes one or more graph attention convolution layers,
the GNN includes a global average pooling layer that returns a fixed size global embedding or numerical representation of a network,
the KPI is an output of the GNN, and
the one or more graph attention convolution layers are capable of handling multi-dimensional array representations of nodes and edges associated with the network graph, and the GNN considers a time dependency of cell-specific features when predicting the KPI of the network.

In one embodiment, the method further comprises:
applying, by the network test device, reinforcement learning to the AI/ML model using real-world data, wherein the AI/ML model is initially trained with synthetic data generated through RIC test simulations.

According to another aspect, there is provided a non-transitory computer-readable medium storing a set of instructions, the set of instructions comprising:
one or more instructions that, when executed by one or more processors of a device, cause the device to perform the method of any preceding claim.

According to a further aspect, there is provided a device, comprising:

one or more memories; and
one or more processors, communicatively coupled to the one or more memories, configured to:

obtain a labeled dataset based on a radio access network intelligent controller (RIC) test simulation;
generate an artificial intelligence or machine learning (AI/ML) model that is trained using the labeled dataset;
receive, via a user interface, a network configuration associated with a user application deployed on an RIC;
predict, using the AI/ML model, a key performance indicator (KPI) based on the network configuration; and
provide, via the user interface, an indication of the KPI.

In one embodiment, the one or more processors, when obtaining the labeled dataset, are configured to:

obtain a reference configuration file that indicates a network topology and user equipment (UE) groups;
set a simulation length and an aggregation level;
determine a baseline configuration file that is based on the reference configuration file, wherein the reference configuration file includes one or more of an updated network topology or updated UE groups based on a randomization of parameters;
perform an RIC simulation using the baseline configuration file to obtain a baseline KPI and a list of available cells;
update an RIC action by randomly shutting down cells, in the list of available cells, to create a configuration file with the RIC action; and
obtain the labeled dataset based on an RIC test of the configuration file with the RIC action.

In one embodiment, the network topology includes a plurality of parameters associated with one or more of: a number of sites, an area-to-number of-sites ratio, a number of buildings, or a building density; and
the UE groups include a plurality of parameters associated with one or more of: a seed value, a number-of-UEs-to-number-of-sites ratio, a target downlink throughput, an average time between calls, or an average call duration.

In one embodiment:

the RIC test produces one or more of a UE report, a cell report, or an events report which are used to obtain the labeled dataset,
the labeled dataset includes the configuration file with the RIC action and a KPI associated with the RIC action,
the configuration file with the RIC action is associated with a randomized network topology, and
the KPI is associated with one of: an energy consumption, a downlink throughput, a quality of service, or an energy efficiency.

In one embodiment, the one or more processors are further configured to:

determine, using the AI/ML model, one or more RIC actions that would result in energy saving; and
provide, via the user interface, an indication of the one or more RIC actions.

In one embodiment:

the AI/ML model is a trained surrogate model that attempts to emulate an RIC testing that produces actual RIC test simulations,

the trained surrogate model is used to predict the KPI, and

the KPI is associated with a prediction of energy savings potential associated with the user application.

In one embodiment:

the AI/ML model is associated with a graph neural network (GNN),

a node of a network graph corresponds to a cell,

an edge of the network graph corresponds to corresponding cells depending on a proximity between the cells,

the node is associated with a node attribute, and the node attribute is based on baseline per cell KPIs from a baseline cell report, baseline overall KPIs from a KPI calculator, and an RIC action mask per cell.

In one embodiment:

the network graph is an input to the GNN,

the GNN includes one or more graph attention convolution layers,

the GNN includes a global average pooling layer that returns a fixed size global embedding or numerical representation of a network,

the KPI is an output of the GNN,

the one or more graph attention convolution layers are capable of handling multi-dimensional array representations of nodes and edges associated with the network graph, and

the GNN considers a time dependency of cell-specific features when predicting the KPI of the network.

In some implementations, an apparatus includes means for obtaining a labeled dataset based on an RIC test simulation; means for generating an AI/ML model that is trained using the labeled dataset; means for receiving, via a user interface, a network configuration associated with a user application deployed on an RIC; means for predicting, using the AI/ML model, a KPI based on the network configuration; and means for providing, via the user interface, an indication of the KPI.

BRIEF DESCRIPTION OF THE DRAWINGS

Fig. 1 is a diagram of an example associated with a pipeline of data generation using automated radio access network (RAN) intelligent controller (RIC) test simulations.

Fig. 2 is a diagram of an example associated with performing parallel simulations of distinct configuration files on multiple containers.

Fig. 3 is a diagram of an example associated with data generation.

Fig. 4 is a diagram of an example associated with generating multiple configuration files per baseline by adding random combinations of RIC actions.

Fig. 5 is a diagram of an example associated with a workflow for converging to an optimal set of RIC actions to result in minimum energy consumption.

Fig. 6 is a diagram of an example associated with a trained surrogate model that attempts to emulate a part of an RIC test device to predict some predefined key performance indicators (KPIs).

Fig. 7 is a diagram of an example associated with a network graph construction from a configuration file and a baseline cell report.

Fig. 8 is a diagram of an example associated with a graph neural network (GNN) architecture.

Fig. 9 is a diagram of an example associated with a parity plot comparing a predicted total energy consumption by a GNN model against a true total energy consumption of a network as simulated by an RIC test device.

Fig. 10 is a diagram of an example environment in which systems and/or methods described herein may be implemented.

Fig. 11 is a diagram of example components of one or more devices of Fig. 10.

Fig. 12 is a flowchart of an example process relating to energy savings prediction using models that are trained using RIC simulation data.

DETAILED DESCRIPTION

The following detailed description of example implementations refers to the accompanying drawings. The same reference numbers in different drawings may identify the same or similar elements.

An RIC is a software-defined component in an open radio access network (O-RAN) architecture. The RIC may be responsible for controlling and optimizing RAN functions. The RIC may bring multi-vendor interoperability, intelligence, agility, and programmability to RANs. The RIC may enable the onboarding of third-party applications that automate and optimize RAN operations while supporting use cases that lower a mobile operator's cost of ownership and enhance a customer quality of experience. The RIC may include a non-real-time RIC and a near-real-time RIC. The non-real-time RIC may be an element in an operator's centralized service management and orchestration framework. The non-real-time RIC may use specialized applications to enable greater than one second control of RAN elements and their resources. The non-real-time RIC may use network data, performance metrics, and subscriber data to provide recommendations for network optimization and policy guidelines to applications (xApps) running on the near-real-time RIC, which in turn may provide policy feedback to the non-real-time RIC. The near-real-time RIC may reside on an edge and may enable network optimization actions that take between 10 milliseconds to one second to complete.

The RIC may provide performance data. The RIC may receive a stream of RAN data, such as counters, KPIs, and/or measurements, which may be analyzed by xApps and artificial intelligence and/or machine learning (AI/ML) engine to make RAN optimization decisions. The RIC may provide resource assurance. The RIC may ensure that services attain a required performance. The RIC may ensure RAN efficiency.

When the RIC is deployed, all messages from a RAN into the RIC may be received over an E2 interface. Most developers may not have a RAN for testing the RIC, which may produce a need to emulate RAN traffic scenarios in order to train the xApps and test output decisions of the RIC. Testing should be done in real-time, given that RIC functionalities are generally performed in real time or in near real time. An operator needs a manner to perform such testing in a lab environment before costly network rollouts and before troubleshooting problems are experienced, which could impact a quality of an end user experience.

The RIC may require inputs in order to make decisions which may improve a performance of the RAN, and the RIC also requires a source for sending its suggested RAN changes or improvements. An RIC test device may provide an emulated RAN (e.g., measurements) to an RIC under test. The RIC test device may receive outputs/decisions from the RIC, and perform modifications according to proposed changes from the RIC. The RIC test device may allow insight as to whether proposed changes improve a RAN efficiency, which may ensure that RIC developers are able to test their RIC effectively. The RIC test device may be a virtual test tool that is able to change inputs at ease. The RIC test device may enable operators to test the RIC and to help expedite rollouts of open RAN networks and architectures.

The RIC test device may receive a configuration file as an input. The configuration file may define a network architecture, which may include a number of cells, a number of buildings, a number of UEs, and other parameters. The RIC test device may run a simulation using the configuration file, which may result in UE reports, cell reports, and/or events reports. The UE report, the cell report, and/or the event report may indicate predicted KPIs, such as energy usage, energy efficiency, a cell quality of service (QoS) score, and/or a downlink throughput. However, performing an RIC simulation using the RIC test device may take a relatively long period of time and/or consume a relatively large number of resources. Further, such a process may need to be repeated for different configuration files, which may result in additional time and/or an excessive consumption of resources.

In some implementations, a network test device may obtain a labeled dataset based on an RIC test simulation. The network test device may perform parallel RIC simulations of distinct configuration files with RIC actions using multiple containers, in order to obtain the labeled dataset. The network test device may generate an AI/ML model that is trained using the labeled dataset. The network test device may receive, via a user interface of the network test device, a network configuration associated with a user application deployed on an RIC. The network test device may predict, using the AI/ML model running on the network test device, a KPI based on the network configuration. The AI/ML model may be a GNN. The AI/ML model may be a trained surrogate model that attempts to emulate an RIC testing that produces actual RIC test simulations, where the trained surrogate model may be used to predict the KPI. The KPI may be associated with a prediction of energy savings potential associated with the user application. The network test device may provide, via the user interface of the network test device, an indication of the KPI.

In some implementations, the AI/ML model may be used to evaluate different user applications (e.g., xApps associated with RICs), and in particular, an energy savings potential of the different user applications. The AI/ML model, such as a GNN, may be integrated into an analytics console of the network test device and display AI/ML-based insights. The AI/ML model may analyze the different user applications, associated network configurations, and actions, and investigate whether further energy savings is possible. The AI/ML model may derive RIC actions that result in minimum energy consumption of a network.

In some implementations, the AI/ML model may consume fewer resources and take less time as compared to using an existing capability of the network test device (e.g., a network test device that does not incorporate an AI/ML model for energy savings prediction). For example, an AI/ML emulation may take a fraction of a second, whereas an RIC simulation may take several minutes. Further, such a process may need to be repeated for different configuration files, which may result in less time and/or a smaller consumption of resources when the AI/ML model is deployed in relation to the RIC simulation.

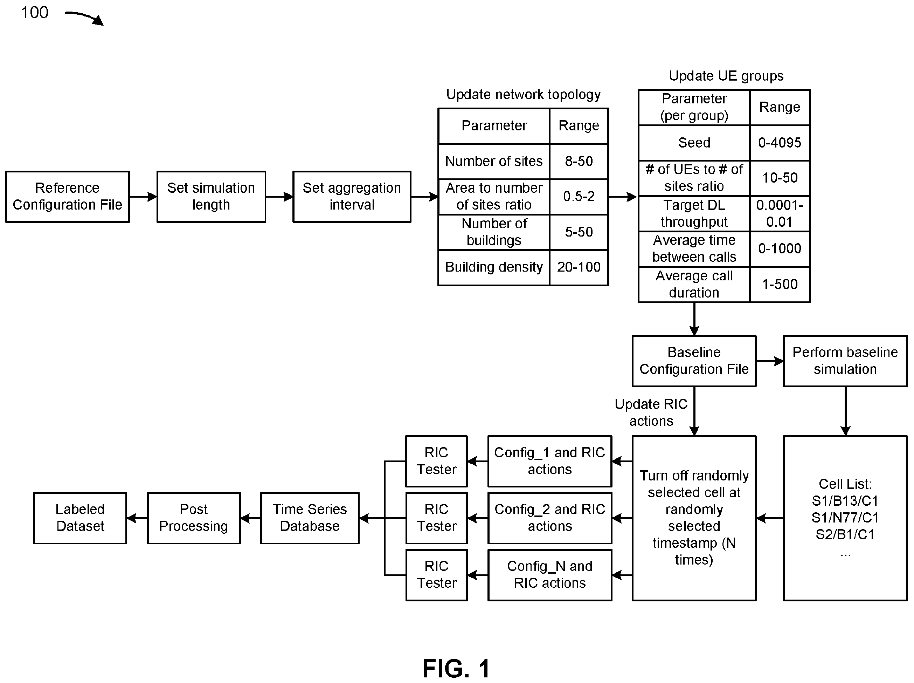

Fig. 1 is a diagram of an example 100 associated with a pipeline of data generation using automated RIC test simulations.

As shown in Fig. 1, in a data generation pipeline, a device (e.g., an RIC test device) may perform a configuration file creation, perform an RIC test simulation, and retrieve data. In the data generation pipeline, the device may randomly update a network topology, user equipment (UE) groups, and/or RIC actions. The device may define a reference configuration file, set a simulation length, and set an aggregation interval. The device may update the network topology, where relevant parameters may include a number of sites, a ratio of an area to a number of sites, a number of buildings, and/or a building density. The device may update the UE groups, where relevant parameters may include a seed value, a ratio of a number of UEs to a number of sites, a target downlink throughput, an average time between cells, and/or an average call duration. The device may obtain a baseline configuration, which may be based on the reference configuration file, the simulation length, the aggregation interval, the updated network topology, and/or the updated UE groups. The baseline configuration file may be a configuration file without any RIC actions. The device may perform a baseline simulation based on the baseline configuration file, which may result in a cell list. The device, using the baseline configuration, may update the RIC actions. The device may turn off a randomly selected cell, from the cell list, at a randomly selected timestamp, and repeat this process N times, which may result in N configuration files with RIC actions per baseline. An RIC action may involve shutting down a given cell at a given timestamp. For example, when a load associated with the given cell is below a defined threshold, the RIC action may be to shut down that cell to save energy over a period of time. Each configuration file may be simulated using RIC testing, and results may be provided to a time series database. A post-processing of the results in the time series database may result in a labeled dataset.

In some implementations, modules may be employed for automated data generation using the RIC test device. A data generation may involve creating a configuration file by setting some parameters that define a network topology and UE groups, simulating these networks in the RIC test device, and performing further data processing to extract several KPIs from reports generated by RIC simulations. A process of establishing a labeled dataset for AI/ML model training may be automated.

In some implementations, the reference configuration file may be a basic configuration file (e.g., in YAML format) that outlines a basic network configuration (or network architecture). For example, the reference configuration file may specify a number of cells, a number of buildings, a road width, a number of UEs, and other parameters. The basic configuration file may be updated with a desired simulation length (e.g., 5 minutes) and an aggregation interval (e.g., how often the KPIs and other attributes are logged, such as every one second or every 30 seconds). The network topology may be updated by randomly selecting some parameter values within a predefined range, as supported by the RIC test device. Since the number of sites in a real telecommunications network may depend on the area being simulated, an area to site ratio (*area to_site_ratio* parameter may be used to infer a simulation area, given the number of sites. Once a network configuration is updated in the reference configuration file, the UE groups may be modified. A seed parameter may randomize an allocation of UEs to various cells. UEs may be generated randomly depending on the number of sites set during the network topology update stage. Other parameters, such as the target downlink throughput, the average time between calls, etc., may also be randomly selected and the reference configuration file may be updated with these parameters. The network topology and the UE groups may be dynamically updated. At every run of the RIC simulation, random values for different parameters of the network topology and the UE groups may be selected.

In some implementations, after the network topology and UE group update, the baseline configuration file may be obtained, where the baseline configuration file may not have any RIC actions. An RIC action may be some action applied on a cell (e.g., shut down the cell at a given time). The RIC simulation may be performed using the generated baseline configuration file. Baseline KPIs and cell reports may be recorded, and a list of cells available in the network may be obtained. One or more cells may be randomly shut down at a given timestamp to create configuration files with some RIC actions. Such a process may be repeated N times so that AI/ML models may be able to learn an impact of RIC actions on the KPIs in addition to the network configuration. The data generated by the RIC test device may be stored in the time series database, which may be queried using a REST application programming interface (API) to retrieve cell/UE reports. The data may be post processed to capture the KPIs associated with every configuration file simulated. Likewise, the labeled dataset may be established, which may record configuration files with a random network topology and RIC actions and their corresponding KPIs. Scripts may be executed in parallel on multiple containers to expedite a data generation process. The labeled dataset may be used to train an AI/ML model, such as a GNN.

As indicated above, Fig. 1 is provided as an example. Other examples may differ from what is described with regard to Fig. 1. The number and arrangement of devices shown in Fig. 1 are provided as an example. In practice, there may be additional devices, fewer devices, different devices, or differently arranged devices than those shown in Fig. 1. Furthermore, two or more devices shown in Fig. 1 may be implemented within a single device, or a single device shown in Fig. 1 may be implemented as multiple, distributed devices. Additionally, or alternatively, a set of devices (e.g., one or more devices) shown in Fig. 1 may perform one or more functions described as being performed by another set of devices shown in Fig. 1.

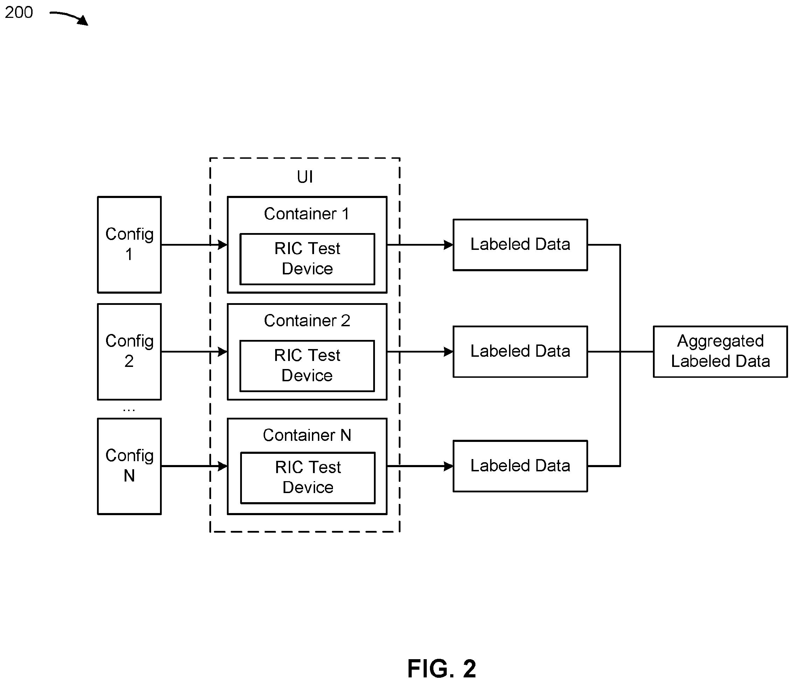

Fig. 2 is a diagram of an example 200 associated with performing parallel simulations of distinct configuration files on multiple containers.

As shown in Fig. 2, scripts may be executed in parallel on multiple containers to expedite a data generation process. For example, a first configuration file may be executed in a first container associated with an RIC test device, a second configuration file may be executed in a second container associated with the RIC test device, and a third configuration file may be executed in a third container associated with the RIC test device. Each configuration file may be associated with an RIC action. Each execution in a respective container may produce labeled data, which may be aggregated to form aggregated labeled data.

In some implementations, several containers may be formed in parallel using a docker container orchestration management tool. A stack may be created using the docker container orchestration management tool, where the stack may use a YAML file (e.g., within an editor in a user interface (UI)) to create multiple instances of containers using the same image, while allowing for different allocations of subnets and endpoint exposure of the UI. By using the docker container orchestration management tool, multiple containers may be created within one script. A "stack" may refer to a group of services that are defined in a docker compose file or deployment configuration. The stack may be a collection of services that are deployed and managed together, making it easier to organize and handle applications that consist of multiple containers.

As indicated above, Fig. 2 is provided as an example. Other examples may differ from what is described with regard to Fig. 2. The number and arrangement of devices shown in Fig. 2 are provided as an example. In practice, there may be additional devices, fewer devices, different devices, or differently arranged devices than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) shown in Fig. 2 may perform one or more functions described as being performed by another set of devices shown in Fig. 2.

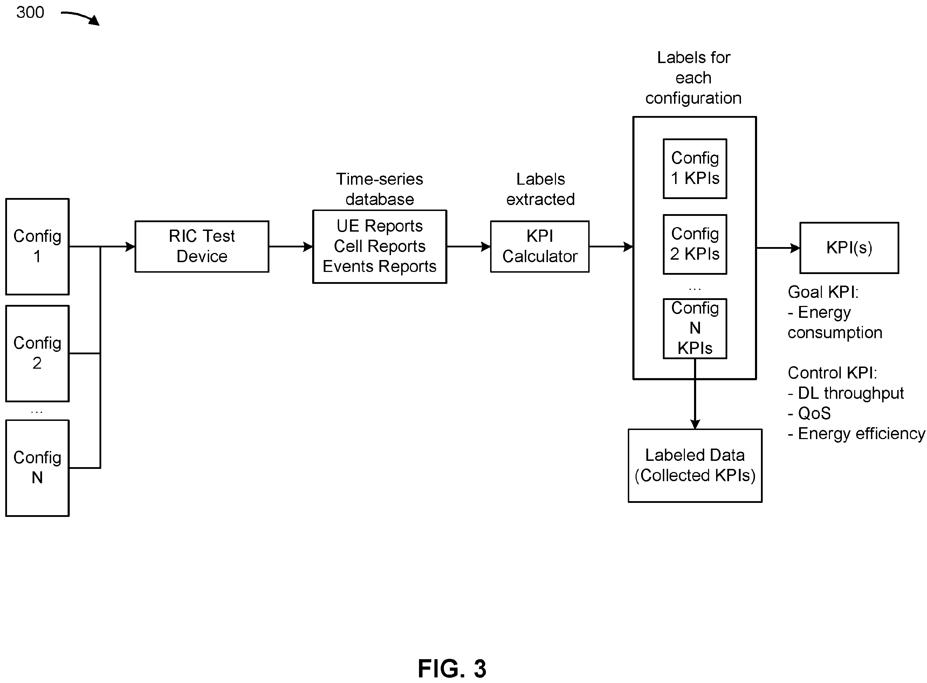

Fig. 3 is a diagram of an example 300 associated with data generation.

As shown in Fig. 3, a plurality of configuration files (e.g., configuration 1, configuration 2, and configuration N) with RIC actions may be provided to an RIC test device, which may produce UE reports, cell reports, and/or events reports that are stored in a time series database. Labels may be extracted from data stored in the time series database using a KPI calculator, such that labels for each configuration file may be determined. For example, configuration 1 KPIs may be determined, configuration 2 KPIs may be determined, and configuration N KPIs may be determined. The labels for each configuration file may form labeled data, which may correspond to collected KPIs. KPIs may include a goal KPI and a control KPI. The goal KPI may be associated with energy consumption. The control KPI may be associated with downlink throughput, QoS, and/or energy efficiency.

In some implementations, after the configuration files are randomly generated, each individual configuration file may be run through the RIC test device, which may be used as a simulator to run the configuration file and retrieve an output. The output may form three tables, where a first table may be associated with the UE reports, a second table may be associated with the cell reports, and a third table may be associated with the events reports. After the output is retrieved, the KPI calculator may be used for measuring specific metrics, such as the QoS, the downlink throughput, and/or the energy consumption. The KPIs may be used as the labeled dataset for further training of an AI/ML model.

As indicated above, Fig. 3 is provided as an example. Other examples may differ from what is described with regard to Fig. 3. The number and arrangement of devices shown in Fig. 3 are provided as an example. In practice, there may be additional devices, fewer devices, different devices, or differently arranged devices than those shown in Fig. 3. Furthermore, two or more devices shown in Fig. 3 may be implemented within a single device, or a single device shown in Fig. 3 may be implemented as multiple, distributed devices. Additionally, or alternatively, a set of devices (e.g., one or more devices) shown in Fig. 3 may perform one or more functions described as being performed by another set of devices shown in Fig. 3.

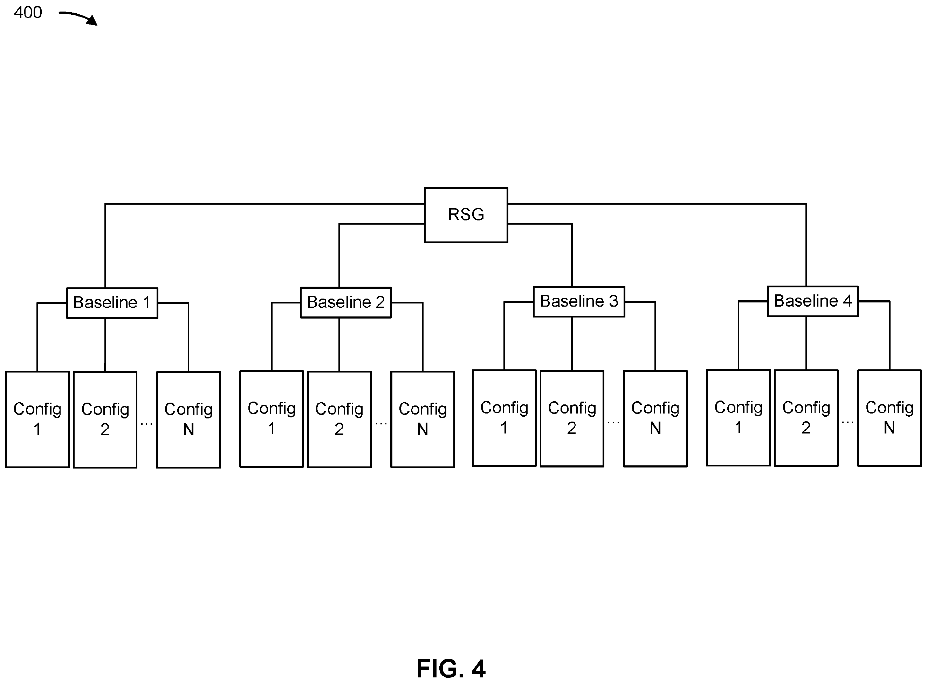

Fig. 4 is a diagram of an example 400 associated with generating multiple configuration files per baseline by adding random combinations of RIC actions.

As shown in Fig. 4, in order to generate configuration files, a RAN scenario generator (RSG) may be defined, which may correspond to a given topology may indicate a number of UEs, buildings, etc. A seed change may be applied to change an arrangement of the topology. A plurality of baselines may be created, where each baseline may correspond to a set RSG and arrangement. Each baseline may be associated with actions, such as turning off cells. Each baseline may be associated with a plurality of configuration files (e.g., M configuration files), where a configuration file may be a file to be used for simulation.

In some implementations, to generate the configuration file, several layers of parameters may be set to account for different variations that are possible in a configuration file. The layers for adjusting parameters may be three layers of parameters. A first layer may be associated with the RSG, which may correspond to a fixed topology of a network (e.g., number of UEs, and/or buildings). A second layer may be associated with an RSG seed, which may involve changing arrangements of the topology. The baseline may be associated with the RSG and the RSG seed. A third layer may be associated with changing actions with the baseline. The configuration file may be associated with the RSG, the RSG seed, and the changing actions with the baseline.

As indicated above, Fig. 4 is provided as an example. Other examples may differ from what is described with regard to Fig. 4. The number and arrangement of devices shown in Fig. 4 are provided as an example. In practice, there may be additional devices, fewer devices, different devices, or differently arranged devices than those shown in Fig. 4. Furthermore, two or more devices shown in Fig. 4 may be implemented within a single device, or a single device shown in Fig. 4 may be implemented as multiple, distributed devices. Additionally, or alternatively, a set of devices (e.g., one or more devices) shown in Fig. 4 may perform one or more functions described as being performed by another set of devices shown in Fig. 4.

In some implementations, in an energy savings use case, an AI/ML engine may be developed that is able to predict an energy savings potential of an xApp. The xApp may be a software module that recommends some RIC action on a cell. The AI/ML engine may be a tool that is integrated into an analytics console of an RIC test device to display AI-based insights. The AI/ML engine may analyze customer xApps, their network configurations and actions, and investigate whether further energy savings is possible. When further energy savings is possible, an energy savings potential of the xApp may be displayed via a UI. While the AI/ML engine is capable of deriving RIC actions that result in minimum energy consumption of a network, these RIC actions may not necessarily be disclosed in the analytics console and may be available to the customer upon request.

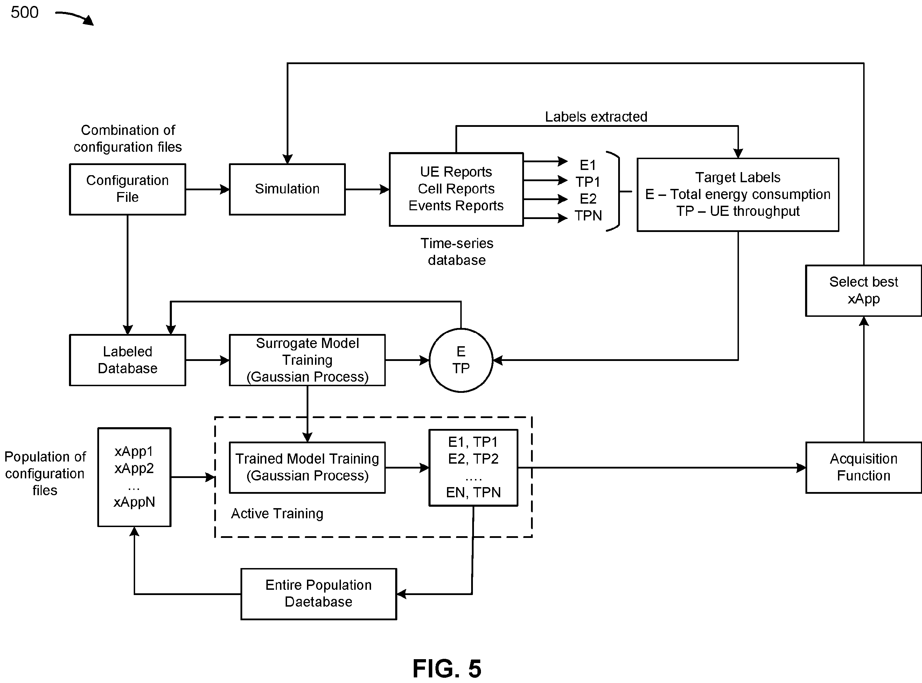

Fig. 5 is a diagram of an example 500 associated with a workflow for converging to an optimal set of RIC actions to result in minimum energy consumption.

As shown in Fig. 5, the workflow of converging to the optimal set of RIC actions (e.g., best xApp) that results in minimum energy consumption may involve three stages. A first stage may be associated with automated data generation. A second stage may be associated with AI/ML surrogate model training. A third stage may be associated with an optimization to find the best xApp. During the first stage, the generation of training data may involve a combination of configuration files, for which a simulation may be performed. The simulation may result in UE reports, cell reports, and/or events reports being stored in a time series database. Labels may be extracted from data stored in the time series database, which may result in target labels associated with total energy consumption and/or UE throughput. For example, the target labels may include "E" for total energy consumption and "TP" for UE throughput. The generation of training data may involve generating data with real labels. During the second stage, the training of AI/ML surrogate models to predict KPIs (e.g., energy consumption) may involve a combination of configuration files, for which labeled data may be obtained and provided for surrogate model training (e.g., GNN, Gaussian process, etc.). The training of AI/ML surrogate models may involve using the labeled data to train the surrogate model. During the third stage, the optimization to find the minimum energy consumption of a given network may involve a population of configuration files (e.g., xApp1, xApp2, and xAppN) provided to a trained surrogate model (e.g., GNN, Gaussian process, etc.,) during an active learning. Different xApps from different vendors may be evaluated to determine an energy savings potential of the different xApps. An acquisition function may be applied to an output of the trained surrogate model, which may result in a selection of the best xApp. The output of the trained surrogate model may be stored in an entire population database. The optimization to find the minimum energy consumption may involve using the trained surrogate model to produce new labels.

In some implementations, the trained surrogate model may be an AI/ML model that attempts to emulate an RIC test device, and the trained surrogate model may learn from data generated by the RIC test device. After training, performing predictions through the AI/ML model may be orders of magnitude faster than performing actual RIC test simulations, which may be useful in an optimization stage that involves exploring a large space of unseen configuration files with various RIC action combinations to find a RIC action combination that yields a lowest energy usage. In other words, the trained surrogate model may be used to determine a specific RIC action to take to minimize energy consumption in a cell. Several algorithms may be applicable for the optimization, including active learning which is an AI/ML based optimization strategy that iteratively picks best candidate from a large population of candidates. An effectiveness of the optimization may rely on an accuracy of the trained surrogate model that attempts to emulate the RIC test device.

As indicated above, Fig. 5 is provided as an example. Other examples may differ from what is described with regard to Fig. 5. The number and arrangement of devices shown in Fig. 5 are provided as an example. In practice, there may be additional devices, fewer devices, different devices, or differently arranged devices than those shown in Fig. 5. Furthermore, two or more devices shown in Fig. 5 may be implemented within a single device, or a single device shown in Fig. 5 may be implemented as multiple, distributed devices. Additionally, or alternatively, a set of devices (e.g., one or more devices) shown in Fig. 5 may perform one or more functions described as being performed by another set of devices shown in Fig. 5.

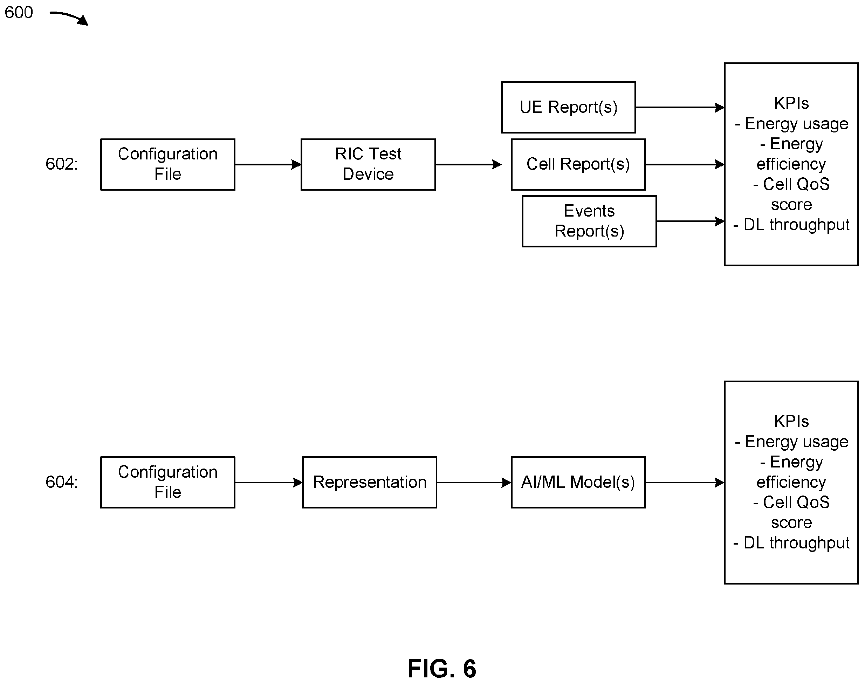

Fig. 6 is a diagram of an example 600 associated with a trained surrogate model that attempts to emulate a part of an RIC test device to predict some predefined KPIs.

As shown by reference number 602, in an RIC simulation, a configuration file may be provided to an RIC test device, which may produce a UE report, a cell report, and/or an event report. The UE report, the cell report, and/or the event report may indicate predicted KPIs, such as energy usage, energy efficiency, a cell QoS score, and/or a downlink throughput. For example, the UE report may indicate a time series of predicted KPIs for a given UE. The cell report may indicate a time series of predicted KPIs for a given cell. The UE report may provide a per-UE KPI as a time series, and the cell report may provide a per-cell KPI as a time series.

As shown by reference number 604, in an AI/ML emulation, a representation of a configuration file may be provided to an AI/ML model. The AI/ML model may be a trained surrogate model. The AI/ML model may be based on a convolutional neural network (CNN), multilayer perceptron (MLP), graph neural network (GNN), or some other suitable technique. The AI/ML model may output predicted KPIs associated with energy usage, energy efficiency, a cell QoS score, and/or a downlink throughput.

In some implementations, the AI/ML emulation may be used instead of the RIC simulation. The AI/ML emulation may be performed in less time and with an acceptable accuracy as compared to the RIC simulation. For example, the AI/ML emulation may take several seconds, whereas the RIC simulation may take several minutes. The AI/ML emulation may emulate the RIC simulation.

In some implementations, the AI/ML model may be developed to accurately predict a goal and control KPIs of a network. The AI/ML model may effectively try to emulate the RIC test device (e.g., hence the AI/ML model may be referred to as the trained surrogate model) in calculating the KPIs given some representation of the configuration file as an input. The AI/ML model may be useful in an optimization stage during which a space of RIC actions may be explored to select a best set of actions and configuration that minimizes the energy usage, without downgrading control KPIs such as energy efficiency, cell QoS and downlink throughput below a certain threshold.. An optimization algorithm may be iterative, and at each iteration, one or many RIC simulations may need to be performed. RIC simulations may be time consuming, which may lead to a potentially intractable optimization. As a result, the AI/ML model may be used to speed up an optimization process.

As indicated above, Fig. 6 is provided as an example. Other examples may differ from what is described with regard to Fig. 6. The number and arrangement of devices shown in Fig. 6 are provided as an example. In practice, there may be additional devices, fewer devices, different devices, or differently arranged devices than those shown in Fig. 6. Furthermore, two or more devices shown in Fig. 6 may be implemented within a single device, or a single device shown in Fig. 6 may be implemented as multiple, distributed devices. Additionally, or alternatively, a set of devices (e.g., one or more devices) shown in Fig. 6 may perform one or more functions described as being performed by another set of devices shown in Fig. 6.

In some implementations, a GNN may be used for KPI prediction. A GNN-based approach may be used for predicting the KPIs of a network, which may be simulated through an RSG of an RIC test. One drawback of certain classical AI/ML models and deep learning architectures, such as CNNs, is an inability of such AI/ML models in handling varying data shapes and sizes. When the network changes with a different number of sites and cells, a new AI/ML model may need to be trained, which is not a scalable solution. On the other hand, the GNN may process data in the shape of a graph with a variable number of nodes and edges. A telecommunications network may be represented as a graph, where cells may correspond to nodes of the graph and connections between cells (depending on their proximity) may indicate edges. The GNN may be employed for an AI/ML architecture for KPI prediction problem. As the data is processed in a native domain of the network, an AI/ML based prediction of KPIs may be aligned with an actual RIC simulation.

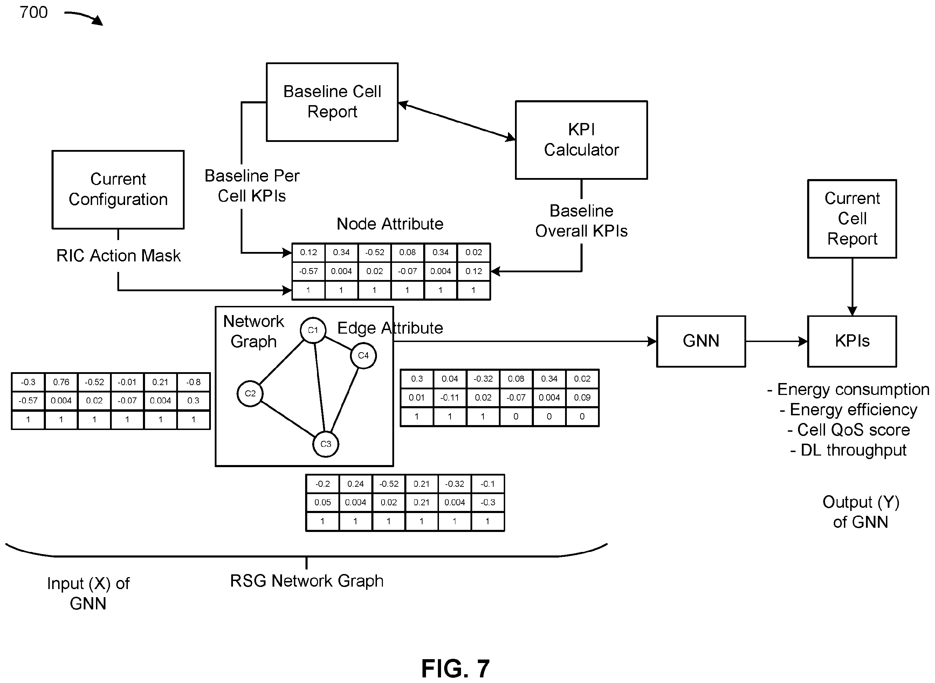

Fig. 7 is a diagram of an example 700 associated with a network graph construction from a configuration file and a baseline cell report.

As shown in Fig. 7, a network graph may be constructed from a hypothetical network with four cells (C1, C2, C3, and C4), where nodes and edges may be represented in the network graph. The network graph may be constructed from a cell report. A node may be associated with node attributes and an edge may be associated with edge attributes. A node attribute may include a value of "1" to indicate that a corresponding cell is turned on, or the node attribute may include a value of "0" to indicate that a corresponding cell is turned off (e.g., RIC action mask). The network graph may be constructed from the configuration file and the baseline cell report. The baseline cell report may not provide any RIC action. The baseline cell report may provide baseline per cell KPIs. Baseline overall KPIs may be indicated by a KPI calculator. A network graph representation of a telecommunications network may be sent through a GNN to predict KPIs. The graph representation may be an RSG network graph, that is an input to the GNN. An output of the GNN may be the predicted KPIs. In this case, the GNN may act as a trained surrogate model (e.g., a surrogate AI/ML model).

In some implementations, in the network graph construction from the baseline cell report, several key considerations may be made in deriving the network graph from the baseline cell report and in preparing the network graph for the GNN. Neighbors of a given cell may be identified using a certain distance cutoff. Neighboring cells may be identified using a geolocation of each cell. When a distance between two cells is less than the distance cutoff, the two cells may be connected with an edge. A standard message passing operation in GNNs may allow information to flow between connected nodes (e.g., first order neighbors). Information from second or third order neighbors may be captured by subsequent message passing layers. From a physical network standpoint, data from a cell very far away may not be necessarily useful to a current cell, as compared to data from neighboring cells.

In some implementations, an RSG network may be visualized as the network graph, and the network graph may be represented in a numeric format to be fed into the GNN. Nodes in the network graph may be represented using the node attribute (which can be multidimensional). The node attribute may contain information that describes the node, or cell in this case. Certain information may be extracted per cell from the configuration file and the baseline cell report in order to construct the node attribute. A node attribute may be a numeric representation of a given cell. The node attribute may be updated by incorporating information of neighboring cells.

In some implementations, the node attribute, which may be an input to the GNN, cannot contain information from the cell report related to a current RSG simulation with RIC actions. In that case, a simulation would have been already done and there is no need for AI/ML prediction. The baseline cell report (e.g., retrieved through RIC simulation of a same configuration file as a current configuration, but without any RIC actions) may be processed to identify certain features (per-cell) to be appended to the node attribute of that cell. Some information, such as the RIC actions, may be missing. The RIC actions may be captured by the current configuration file and appended to the node attribute in the form of an action mask per cell. Additionally, to assist with a mapping from the network graph to KPIs for the GNN, overall KPIs may be calculated from the baseline cell report and then appended to the edge attribute. Therefore, an input network graph may be a complete representation of a physical network with some additional added features.

In some implementations, the node attribute may be associated with selected per-cell features/columns extracted from the baseline cell report. The node attribute may be associated with an RIC action mask per cell in the form of a binary vector. The node attribute may be associated with overall KPIs from a baseline simulation. Regarding edge attributes, edges may be created between neighbors based on a distance cutoff or a fixed number of neighbors (e.g., 6 neighbors to a cell may be connected no matter the distance). The edge attribute may contain an actual distance between the two nodes that form the edge.

As indicated above, Fig. 7 is provided as an example. Other examples may differ from what is described with regard to Fig. 7. The number and arrangement of devices shown in Fig. 7 are provided as an example. In practice, there may be additional devices, fewer devices, different devices, or differently arranged devices than those shown in Fig. 7. Furthermore, two or more devices shown in Fig. 7 may be implemented within a single device, or a single device shown in Fig. 7 may be implemented as multiple, distributed devices. Additionally, or alternatively, a set of devices (e.g., one or more devices) shown in Fig. 7 may perform one or more functions described as being performed by another set of devices shown in Fig. 7.

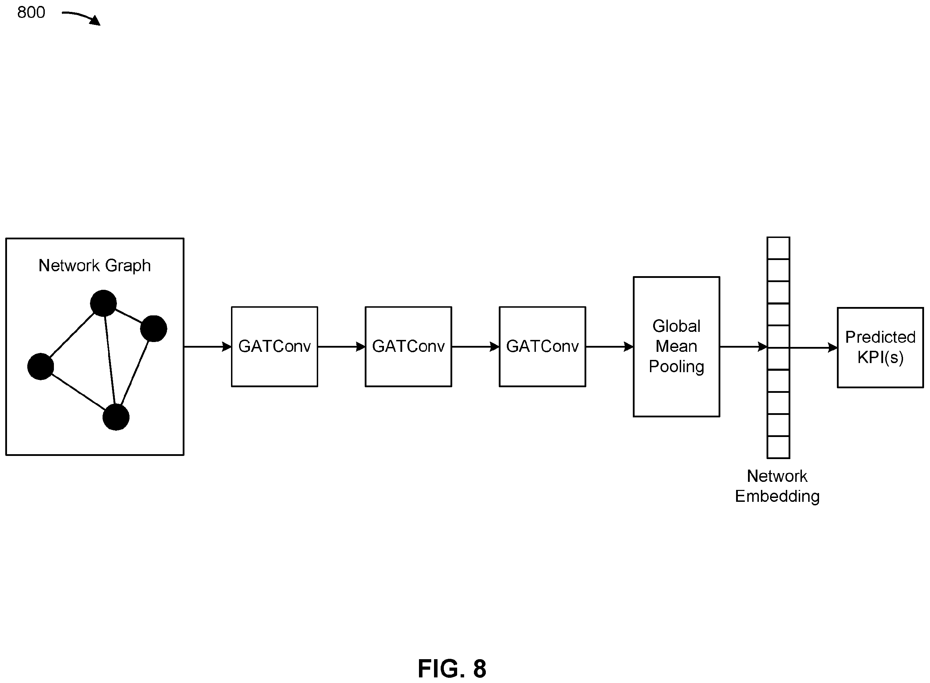

Fig. 8 is a diagram of an example 800 associated with a GNN architecture.

As shown in Fig. 8, a network graph may be provided to the GNN architecture, which may include three graph attention convolution layers (GATConv), followed by a global average pooling layer that returns a fixed size global embedding (e.g., numerical representation) of a network. The fixed size global embedding may be a learned vector of the network graph, which may be used to predict a certain **KPI** of a network (e.g., energy consumption). A GNN model may take as input a set of node attributes and edge attributes (including an adjacency matrix that defines links between nodes), and the GNN model may perform a graph convolution (also known as message passing) operation to update initial attributes through each layer. Specifically, node attributes may be updated by aggregating information from neighboring nodes and edges. When such an operation is performed once, every node attribute may become aware of its neighborhood. Further graph convolutional layers may be added to the GNN to capture information from second or third order neighbors. All node attributes may be aggregated to a single vector by applying a simple function (such as element-wise mean) at the global pooling layer (also called the readout layer).

As indicated above, Fig. 8 is provided as an example. Other examples may differ from what is described with regard to Fig. 8. The number and arrangement of devices shown in Fig. 8 are provided as an example. In practice, there may be additional devices, fewer devices, different devices, or differently arranged devices than those shown in Fig. 8. Furthermore, two or more devices shown in Fig. 8 may be implemented within a single device, or a single device shown in Fig. 8 may be implemented as multiple, distributed devices. Additionally, or alternatively, a set of devices (e.g., one or more devices) shown in Fig. 8 may perform one or more functions described as being performed by another set of devices shown in Fig. 8.

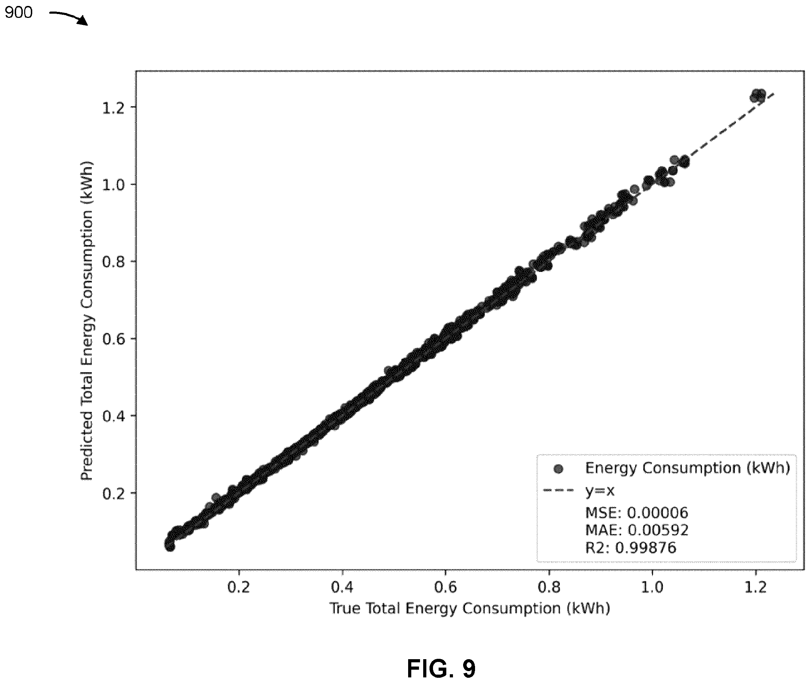

Fig. 9 is a diagram of an example 900 associated with a parity plot comparing a predicted total energy consumption by a GNN model against a true total energy consumption of a network as simulated by an RIC test device.

In some implementations, a GNN may be trained and evaluated in predicting an energy consumption of telecommunication networks in kWh. A dataset may include approximately 10,500 data samples or more (e.g., configuration files and associated cell reports), which may be split into 80% training and 20% test sets. The GNN may be trained on the training set and its performance may be evaluated on the test set, which may be new unseen data to the GNN.

As shown in Fig. 9, the parity plot may indicate the predicted total energy consumption versus the true total energy consumption. The parity plot may be associated with a mean absolute error (MAE), a mean squared error (MSE), and a coefficient of determination (R2) (e.g., square of correlation coefficient). The GNN may accurately predict an energy consumption of unseen configuration files. For example, the MAE may be less than 0.006 kWh, which may be acceptable for the GNN to be used as a trained surrogate model of an optimization pipeline. A model performance may increase as a dataset size increases, and a more accurate trained surrogate model may limit a number of iterations required for optimization algorithm to converge.

As indicated above, Fig. 9 is provided as an example. Other examples may differ from what is described with regard to Fig. 9.

In some implementations, ablation experiments may be performed to investigate an optimal GNN architecture and node attribute features that achieve a lowest error in predicting KPIs. The ablation experiments may be performed on a platform used to deploy AI/ML workflows. The platform may enable the orchestration of AI/ML workflows on a node cluster. The ablation experiments may include changing a graph convolution layer (e.g., graph convolutional convolution (GCNConv), self-adaptive stable gate convolution (SAGEConv), or graph attention convolution (GATConv)), expanding an edge attribute (e.g., an actual distance between two cells that form an edge) using a Gaussian expansion technique, or changing a number of features used to construct node attributes. For example, a GATConv architecture may produce the best performance (e.g., lowest MAE), in relation to a GCNConv architecture or a SAGEConv architecture. Applying a Gaussian expansion on the distance may not lead to improved performance. Constructing the node attribute with four features captured from a baseline cell report may produce favorable results. Further, MAE, MSE, and R2 score curves may be captured as training progresses for the best GNN model with three GATConv layers. In other words, the MAE, MSE, and R2 score curves may be captured for the GNN training.

In some implementations, a GNN architecture may process multi-dimensional node attributes. A numeric array to represent nodes in a network graph may be two-dimensional (2D). Each feature may be time-dependent, resulting in an array of shape (*n features, n_timestamps*) as the node attribute. In order to use GATConv layers in the GNN, 2D node attribute arrays may be flattened into a one-dimensional (1D) vector, which may remove spatial and temporal information contained within the node attribute and yield a suboptimal performance.

In some implementations, the GNN may process telecommunications network graphs represented with multi-dimensional node attributes. The GNN may take into account a time dependency of cell-specific features (such as physical resource block usage, and/or downlink throughput) in predicting various KPIs of a whole network. Additionally, an attention mechanism integrated with a graph transformer architecture may be utilized in developing message passing layers of the GNN. The GNN may be widely applicable in an industry for modeling wireless networks and may provide prediction and analysis of their KPIs.

In some implementations, the message passing (e.g., graph convolution) layer of the GNN may be capable of handling multi-dimensional array representations of graph nodes and edges. A primary function of the message passing layer may be to update every node attribute by aggregating information from neighboring nodes. As an input graph (of a telecommunications network) is processed through several message passing layers, information from higher order neighbors that are not directly linked to a current node of interest may be available in updating a current node attribute. Moreover, self-attention from transformer architecture associated with natural language processing may be incorporated. An attention score may be calculated for all neighbors of a given node, and the node attribute of every neighbor may be weighted with its associated attention score before the neighboring node attributes are aggregated. The attention weights may indicate an importance of a certain neighboring node to a given node of interest.

In some implementations, operations within one message passing layer of the GNN may be formulated, where n indicates a dimensionality of node attribute, $h_i^l$ indicates a node attribute of node *i* at layer $(h_i^l \in \mathbb{R}^n)$, $e_{i,j}^l$ indicates an edge attribute of the edge connecting node *i* and node *j* at layer *l*, *N(i)* indicates a set of neighbors of node *i*, $W_Q^l, W_K^l$ and $W_V^l$ are learnable weight matrices at layer *l* for projecting query, key, and value arrays in a transformer architecture, and *d* indicates a dimensionality of the key/query projections.

In some implementations, for an attention weight calculation, for each node $v_i$, the attention weights for all neighbors $j \in N(i)$ may be calculated by applying the transformer attention mechanism. A query, key, and value tensors $Q_i^l$ may be computed by projecting the node attributes using learnable weights, such as $Q_i^l = h_i^l W_Q^l, K_j^l = h_j^l W_K^l$ for each $j \in N(i)$, and $V_j^l = h_j^l W_V^l$ for each $j \in N(i)$. The attention scores may be calculated in accordance with:

$$\alpha_{ij}^l = softmax\left(\frac{Q_i^l (K_j^l)^T}{\sqrt{d}}\right)$$ for each $j \in N(i)$, where $\alpha_{ij}^l$ represents an attention weight of node *j* for node *i*, indicating an importance of information in node *j* feature $(h_j^l)$ to node *i*.

In some implementations, for an aggregation with attention weights, calculated attention weights may be used to obtain a weighted aggregate of neighboring node attributes in accordance with:

$$a_i^{l+1} = \sum_{j \in N(i)} \alpha_{ij}^l v_j^l \parallel e_{i,j}^l W_e^l$$, where $\parallel$ is a concatenation operator and $W_e^l$ is a learnable weight matrix used to transform the dimensions of $e_{i,j}^{l}$ to be compatible with that of the weighted node attributes of neighboring nodes.

In some implementations, for an update of node attributes, the node attribute of each node $i$ may be updated based on its own features and aggregated information in accordance with: $h_i^{l+1} = g\left(h_i^l, a_i^{l+1}\right)$, which may be an update function that combines current features of node $i$ with aggregated features specific to that node. Further, g(.) may be a mathematical function or a feed-forward neural network. In this formulation, $h_i^l$ and $e_{i,j}^l$ may continue to be multi-dimensional tensors, and the weight matrices $W_Q^l, W_K^l$ and $W_V^l$ may project these vectors into spaces necessary for calculating attention. Such an attention-based aggregation mechanism may allow the GNN to adaptively focus on the most relevant parts of the neighborhood for each node, enhancing its ability to model complex dependencies in the data. By incorporating transformer-style attention, the GNN may more effectively capture nuanced relationships between cells in a telecommunications network, potentially leading to improved performance on downstream tasks.

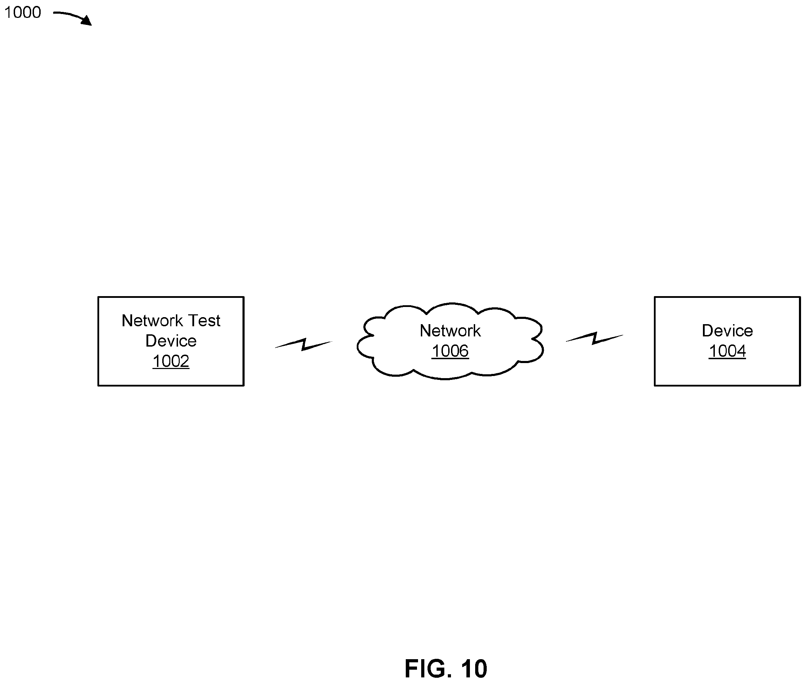

Fig. 10 is a diagram of an example environment 1000 in which systems and/or methods described herein may be implemented. As shown in Fig. 10, environment 1000 may include a network test device 1002, a device 1004, and a network 1006. Devices of environment 1000 may interconnect via wired connections, wireless connections, or a combination of wired and wireless connections. The network test device 1002 and/or the device may run an AI/ML model, such as a GNN.

The network test device 1002 may include one or more devices capable of receiving, processing, storing, routing, and/or providing information associated with energy savings prediction using models that are trained using RIC simulation data, as described elsewhere herein. The network test device 1002 may include a computing device. The network test device 1002 may be used by network equipment manufacturers for function, system integration, capacity, and stress testing and emulation of a plurality of mobile devices, across multiple cells, to set up and test network nodes. The network test device 1002 may deliver voice, data, realistic mobility models, and 4G/5G core emulation, thereby providing a comprehensive validation solution. The network test device 1002 may ensure that users in a network are obtaining adequate quality of service. The network test device 1002 may ensure that the network is satisfying latency and round-trip time requirements for voice and time-critical applications.

The device 1004 may include one or more devices capable of receiving, generating, storing, processing, providing, and/or routing information associated with energy savings prediction using models that are trained using RIC simulation data, as described elsewhere herein. The device 1004 may include a communication device and/or a computing device. For example, the device 1004 may include a server, such as an application server, a client server, a web server, a database server, a host server, a proxy server, a virtual server (e.g., executing on computing hardware), or a server in a cloud computing system. In some implementations, the device 1004 may include computing hardware used in a cloud computing environment.

The network 1006 may include one or more wired and/or wireless networks. For example, the network 1006 may include a cellular network (e.g., a 5G network, a 4G network, a Long Term Evolution (LTE) network, a Third Generation (3G) network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, and/or a combination of these or other types of networks. The network 1006 may enable communication among the one or more devices of environment 300.

The number and arrangement of devices and networks shown in Fig. 10 are provided as an example. In practice, there may be additional devices and/or networks, fewer devices and/or networks, different devices and/or networks, or differently arranged devices and/or networks than those shown in Fig. 10. Furthermore, two or more devices shown in Fig. 10 may be implemented within a single device, or a single device shown in Fig. 10 may be implemented as multiple, distributed devices. Additionally, or alternatively, a set of devices (e.g., one or more devices) of environment 1000 may perform one or more functions described as being performed by another set of devices of environment 1000.

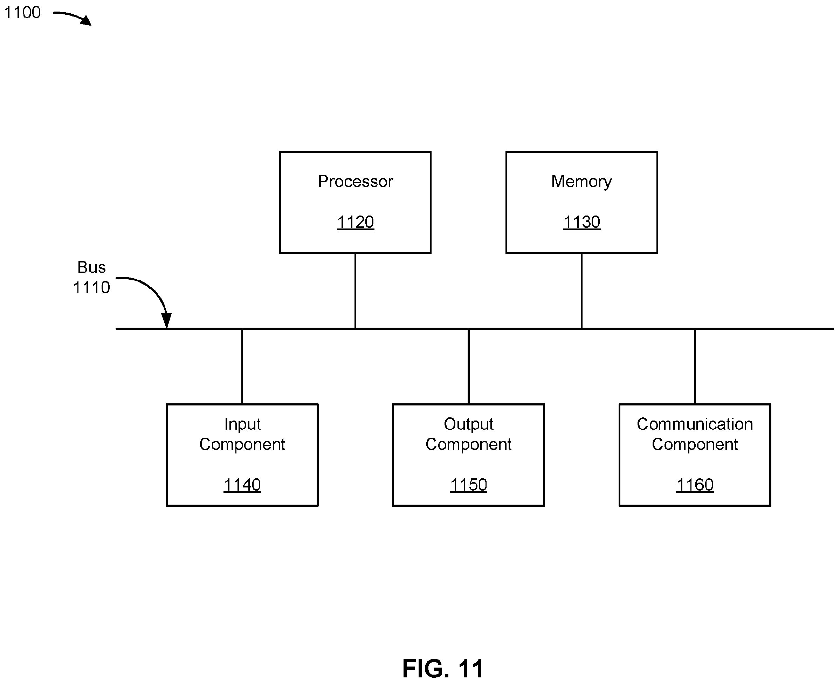

Fig. 11 is a diagram of example components of a device 1100 associated with energy savings prediction using models that are trained using RIC simulation data. The device 1100 may correspond to a network test device (e.g., network test device 1002). In some implementations, the network test device may include one or more devices 1100 and/or one or more components of the device 1100. As shown in Fig. 11, the device 1100 may include a bus 1110, a processor 1120, a memory 1130, an input component 1140, an output component 1150, and/or a communication component 1160.

The bus 1110 may include one or more components that enable wired and/or wireless communication among the components of the device 1100. The bus 1110 may couple together two or more components of Fig. 11, such as via operative coupling, communicative coupling, electronic coupling, and/or electric coupling. For example, the bus 1110 may include an electrical connection (e.g., a wire, a trace, and/or a lead) and/or a wireless bus.

The processor 1120 may include a central processing unit, a graphics processing unit, a microprocessor, a controller, a microcontroller, a digital signal processor, a field-programmable gate array, an application-specific integrated circuit, and/or another type of processing component. The processor 1120 may be implemented in hardware, firmware, or a combination of hardware and software. In some implementations, the processor 1120 may include one or more processors capable of being programmed to perform one or more operations or processes described elsewhere herein.

The memory 1130 may include volatile and/or nonvolatile memory. For example, the memory 1130 may include random access memory (RAM), read only memory (ROM), a hard disk drive, and/or another type of memory (e.g., a flash memory, a magnetic memory, and/or an optical memory). The memory 1130 may include internal memory (e.g., RAM, ROM, or a hard disk drive) and/or removable memory (e.g., removable via a universal serial bus connection). The memory 1130 may be a non-transitory computer-readable medium. The memory 1130 may store information, one or more instructions, and/or software (e.g., one or more software applications) related to the operation of the device 1100. In some implementations, the memory 1130 may include one or more memories that are coupled (e.g., communicatively coupled) to one or more processors (e.g., processor 1120), such as via the bus 1110. Communicative coupling between a processor 1120 and a memory 1130 may enable the processor 1120 to read and/or process information stored in the memory 1130 and/or to store information in the memory 1130.

The input component 1140 may enable the device 1100 to receive input, such as user input and/or sensed input. For example, the input component 1140 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 1150 may enable the device 1100 to provide output, such as via a display, a speaker, and/or a light-emitting diode. The communication component 1160 may enable the device 1100 to communicate with other devices via a wired connection and/or a wireless connection. For example, the communication component 1160 may include a receiver, a transmitter, a transceiver, a modem, a network interface card, and/or an antenna.

The device 1100 may perform one or more operations or processes described herein. For example, a non-transitory computer-readable medium (e.g., memory 1130) may store a set of instructions (e.g., one or more instructions or code) for execution by the processor 1120. The processor 1120 may execute the set of instructions to perform one or more operations or processes described herein. In some implementations, execution of the set of instructions, by one or more processors 1120, causes the one or more processors 1120 and/or the device 1100 to perform one or more operations or processes described herein. In some implementations, hardwired circuitry may be used instead of or in combination with the instructions to perform one or more operations or processes described herein. Additionally, or alternatively, the processor 1120 may be configured to perform one or more operations or processes described herein. Thus, implementations described herein are not limited to any specific combination of hardware circuitry and software.

The number and arrangement of components shown in Fig. 11 are provided as an example. The device 1100 may include additional components, fewer components, different components, or differently arranged components than those shown in Fig. 11. Additionally, or alternatively, a set of components (e.g., one or more components) of the device 1100 may perform one or more functions described as being performed by another set of components of the device 1100.

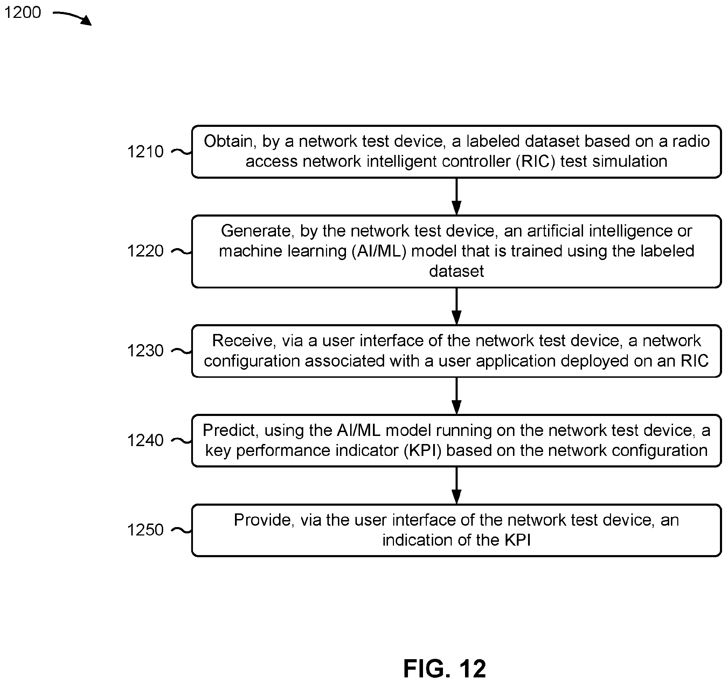

Fig. 12 is a flowchart of an example process 1200 associated with energy savings prediction using models that are trained using RIC simulation data. In some implementations, one or more process blocks of Fig. 12 may be performed by a network test device (e.g., network test device 1002). Additionally, or alternatively, one or more process blocks of Fig. 12 may be performed by one or more components of device 1100, such as processor 1120, memory 1130, input component 1140, output component 1150, and/or communication component 1160.

As shown in Fig. 12, process 1200 may include obtaining, by the network test device, a labeled dataset based on an RIC test simulation (block 1210). The network test device may obtain a reference configuration file that indicates a network topology and UE groups. The network test device may set a simulation length and an aggregation level. The network test device may determine a baseline configuration file that is based on the reference configuration file, wherein the reference configuration file includes one or more of an updated network topology or updated UE groups based on a randomization of parameters. The network test device may perform an RIC simulation using the baseline configuration file to obtain a baseline KPI and a list of available cells. The network test device may update an RIC action by randomly shutting down cells, in the list of available cells, to create a configuration file with the RIC action. The network test device may obtain the labeled dataset based on an RIC test of the configuration file with the RIC action.

In some implementations, the network topology may include a plurality of parameters associated with one or more of: a number of sites, an area-to-number of-sites ratio, a number of buildings, or a building density. The UE groups may include a plurality of parameters associated with one or more of: a seed value, a number-of-UEs-to-number-of-sites ratio, a target downlink throughput, an average time between calls, or an average call duration.

In some implementations, the network test device may perform parallel RIC simulations of distinct configuration files with different RIC actions using multiple containers, in order to obtain the labeled dataset. The RIC test may produce one or more of a UE report, a cell report, or an events report which are used to obtain the labeled dataset. The labeled dataset may include the configuration file with the RIC action and a KPI associated with the RIC action. The configuration file with the RIC action may be associated with a randomized network topology.

As shown in Fig. 12, process 1200 may include generating, by the network test device, an AI/ML model that is trained using the labeled dataset (block 1220). The AI/ML model may be a trained surrogate model that attempts to emulate an RIC testing that produces actual RIC test simulations. The trained surrogate model may be used to predict the KPI. The KPI may be associated with a prediction of energy savings potential associated with a user application deployed on an RIC.

In some implementations, the AI/ML model may be associated with a GNN. A node of a network graph may correspond to a cell. An edge of the network graph may correspond to corresponding cells depending on a proximity between the cells. The node may be associated with a node attribute. The node attribute may be based on baseline per cell KPIs from a baseline cell report, baseline overall KPIs from a KPI calculator, and an RIC action mask per cell. The network graph may be an input to the GNN. The GNN may include one or more graph attention convolution layers. The GNN may include a global average pooling layer that returns a fixed size global embedding or numerical representation of a network. The KPI may be an output of the GNN. The one or more graph attention convolution layers may be capable of handling multi-dimensional array representations of nodes and edges associated with the network graph, and the GNN may consider a time dependency of cell-specific features when predicting the KPI of the network.

As shown in Fig. 12, process 1200 may include receiving, via a user interface of the network test device, a network configuration associated with the user application deployed on ethe RIC (block 1230). The user application may be an xApp. For example, the network test device may run the AI/ML model in order to analyze customer xApps, associated network configurations and actions.

As shown in Fig. 12, process 1200 may include predicting, using the AI/ML model running on the network test device, a KPI based on the network configuration (block 1240). The KPI may be an energy savings potential of the xApp. Alternatively, the KPI may be associated with one of: an energy consumption, a downlink throughput, a quality of service, or an energy efficiency. Alternatively, the AI/ML model may run in a cloud computing system, and an output of the AI/ML model may be provided to the network test device.

As shown in Fig. 12, process 1200 may include providing, via the user interface of the network test device, an indication of the KPI (block 1250). The network test device may display the KPI. In some implementations, the network test device may determine, using the AI/ML model running on the network test device, one or more RIC actions that would result in energy saving. The network test device may provide, via the user interface of the network test device, an indication of the one or more RIC actions. The network test device may display the one or more RIC actions.

In some implementations, the network test device may apply reinforcement learning to the AI/ML model using real-world data, where the AI/ML model may initially be trained with synthetic data generated through RIC test simulations. For example, the reinforcement learning may be subsequently used to improve, with the real-world data, the AI/ML model that is initially trained with purely synthetic data generated through the RIC test simulations. The subsequent usage of reinforcement learning may facilitate autonomy, and adapt the AI/ML model to face real-world conditions.

Although Fig. 12 shows example blocks of process 1200, in some implementations, process 1200 may include additional blocks, fewer blocks, different blocks, or differently arranged blocks than those depicted in Fig. 12. Additionally, or alternatively, two or more of the blocks of process 1200 may be performed in parallel.

Accordingly, there has been described a network test device that may obtain a labeled dataset based on a radio access network intelligent controller (RIC) test simulation. The network test device may generate an artificial intelligence or machine learning (AI/ML) model that is trained using the labeled dataset. The network test device may receive, via a user interface, a network configuration associated with a user application deployed on an RIC. The network test device may predict, using the AI/ML model running on the network test device, a key performance indicator (KPI) based on the network configuration. The network test device may provide, via the user interface, an indication of the KPI.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

**Claims**

1. A method, comprising:

   obtaining, by a network test device, a labeled dataset based on a radio access network intelligent controller, RIC, test simulation;
   generating, by the network test device, an artificial intelligence or machine learning, AI/ML, model that is trained using the labeled dataset;
   receiving, via a user interface of the network test device, a network configuration associated with a user application deployed on an RIC;
   predicting, using the AI/ML model running on the network test device, a key performance indicator, KPI, based on the network configuration; and
   providing, via the user interface of the network test device, an indication of the KPI.

2. The method of claim 1, wherein obtaining the labeled dataset comprises:

   obtaining, by the network test device, a reference configuration file that indicates a network topology and user equipment, UE, groups;
   setting, by the network test device, a simulation length and an aggregation level;
   determining, by the network test device, a baseline configuration file that is based on the reference configuration file, wherein the reference configuration file includes one or more of an updated network topology or updated UE groups based on a randomization of parameters;
   performing, by the network test device, an RIC simulation using the baseline configuration file to obtain a baseline KPI and a list of available cells;
   updating, by the network test device, an RIC action by randomly shutting down cells, in the list of available cells, to create a configuration file with the RIC action; and

obtaining, by the network test device, the labeled dataset based on an RIC test of the configuration file with the RIC action, and optionally wherein:

the network topology includes a plurality of parameters associated with one or more of: a number of sites, an area-to-number of-sites ratio, a number of buildings, or a building density; and
the UE groups include a plurality of parameters associated with one or more of: a seed value, a number-of-UEs-to-number-of-sites ratio, a target downlink throughput, an average time between calls, or an average call duration.

3. The method of claim 2, wherein obtaining the labeled dataset is based on performing parallel RIC simulations of distinct configuration files with different RIC actions using multiple containers.

4. The method of claim 2 or claim 3, wherein:

the RIC test produces one or more of a UE report, a cell report, or an events report which are used to obtain the labeled dataset,
the labeled dataset includes the configuration file with the RIC action and a KPI associated with the RIC action,
the configuration file with the RIC action is associated with a randomized network topology, and
the KPI is associated with one of: an energy consumption, a downlink throughput, a quality of service, or an energy efficiency.

5. The method of any preceding claim, further comprising:

determining, using the AI/ML model running on the network test device, one or more RIC actions that would result in energy saving; and
providing, via the user interface of the network test device, an indication of the one or more RIC actions.

6. The method of any preceding claim, wherein:

the AI/ML model is a trained surrogate model that attempts to emulate an RIC testing that produces actual RIC test simulations,
the trained surrogate model is used to predict the KPI, and
the **KPI** is associated with a prediction of energy savings potential associated with the user application.

7. The method of any preceding claim, wherein:

the AI/ML model is associated with a graph neural network, GNN),
a node of a network graph corresponds to a cell,
an edge of the network graph corresponds to corresponding cells depending on a proximity between the cells, and
the node is associated with a node attribute,
and optionally wherein the node attribute is based on baseline per cell KPIs from a baseline cell report, baseline overall KPIs from a **KPI** calculator, and an RIC action mask per cell.

8. The method of claim 7, wherein:

the network graph is an input to the GNN,
the GNN includes one or more graph attention convolution layers,
the GNN includes a global average pooling layer that returns a fixed size global embedding or numerical representation of a network,
the **KPI** is an output of the GNN, and
the one or more graph attention convolution layers are capable of handling multi-dimensional array representations of nodes and edges associated with the network graph, and the GNN considers a time dependency of cell-specific features when predicting the KPI of the network.

9. The method of any preceding claim, further comprising:
applying, by the network test device, reinforcement learning to the AI/ML model using real-world data, wherein the AI/ML model is initially trained with synthetic data generated through RIC test simulations.

10. A non-transitory computer-readable medium storing a set of instructions, the set of instructions comprising:
one or more instructions that, when executed by one or more processors of a device, cause the device to perform the method of any preceding claim.

11. A device, comprising:

one or more memories; and
one or more processors, communicatively coupled to the one or more memories, configured to:

obtain a labeled dataset based on a radio access network intelligent controller, RIC, test simulation;
generate an artificial intelligence or machine learning, AI/ML, model that is trained using the labeled dataset;
receive, via a user interface, a network configuration associated with a user application deployed on an RIC;

predict, using the AI/ML model, a key performance indicator, KPI, based on the network configuration; and

provide, via the user interface, an indication of the KPI.

12. The device of claim 11, wherein the one or more processors, when obtaining the labeled dataset, are configured to:

obtain a reference configuration file that indicates a network topology and user equipment, UE, groups;

set a simulation length and an aggregation level;

determine a baseline configuration file that is based on the reference configuration file, wherein the reference configuration file includes one or more of an updated network topology or updated UE groups based on a randomization of parameters;

perform an RIC simulation using the baseline configuration file to obtain a baseline KPI and a list of available cells;

update an RIC action by randomly shutting down cells, in the list of available cells, to create a configuration file with the RIC action; and

obtain the labeled dataset based on an RIC test of the configuration file with the RIC action, and optionally wherein:

the network topology includes a plurality of parameters associated with one or more of: a number of sites, an area-to-number of-sites ratio, a number of buildings, or a building density; and

the UE groups include a plurality of parameters associated with one or more of: a seed value, a number-of-UEs-to-number-of-sites ratio, a target downlink throughput, an average time between calls, or an average call duration.

13. The device of claim 12, wherein:

the RIC test produces one or more of a UE report, a cell report, or an events report which are used to obtain the labeled dataset,

the labeled dataset includes the configuration file with the RIC action and a KPI associated with the RIC action,

the configuration file with the RIC action is associated with a randomized network topology, and

the KPI is associated with one of: an energy consumption, a downlink throughput, a quality of service, or an energy efficiency.

14. The device of claim 12 or claim 13, wherein the one or more processors are further configured to:

determine, using the AI/ML model, one or more RIC actions that would result in energy saving; and

provide, via the user interface, an indication of the one or more RIC actions.

15. The device of any of claims 11 to 14, wherein:

the AI/ML model is a trained surrogate model that attempts to emulate an RIC testing that produces actual RIC test simulations,

the trained surrogate model is used to predict the KPI, and

the KPI is associated with a prediction of energy savings potential associated with the user application.

16. The device of any of claims 11 to 15, wherein:

the AI/ML model is associated with a graph neural network, GNN,

a node of a network graph corresponds to a cell,

an edge of the network graph corresponds to corresponding cells depending on a proximity between the cells,

the node is associated with a node attribute, and

the node attribute is based on baseline per cell KPIs from a baseline cell report, baseline overall KPIs from a KPI calculator, and an RIC action mask per cell, and optionally wherein:

the network graph is an input to the GNN,

the GNN includes one or more graph attention convolution layers,

the GNN includes a global average pooling layer that returns a fixed size global embedding or numerical representation of a network,

the KPI is an output of the GNN,

the one or more graph attention convolution layers are capable of handling multi-dimensional array representations of nodes and edges associated with the network graph, and

the GNN considers a time dependency of cell-specific features when predicting the KPI of the network.

**Update network topology**

| Parameter | Range |
|---|---|
| Number of sites | 8-50 |
| Area to number of sites ratio | 0.5-2 |
| Number of buildings | 5-50 |
| Building density | 20-100 |

**Update UE groups**

| Parameter (per group) | Range |
|---|---|
| Seed | 0-4095 |
| # of UEs to # of sites ratio | 10-50 |
| Target DL throughput | 0.0001-0.01 |
| Average time between calls | 0-1000 |
| Average call duration | 1-500 |

100

Reference Configuration File → Set simulation length → Set aggregation interval →

→ Baseline Configuration File → Perform baseline simulation

Baseline Configuration File → Update RIC actions → Turn off randomly selected cell at randomly selected timestamp (N times) → Cell List: S1/B13/C1 S1/N77/C1 S2/B1/C1 ...

Turn off randomly selected cell at randomly selected timestamp (N times) → Config_1 and RIC actions → RIC Tester

→ Config_2 and RIC actions → RIC Tester

→ Config_N and RIC actions → RIC Tester

RIC Tester → Time Series Database → Post Processing → Labeled Dataset

**FIG. 1**

FIG. 2

FIG. 3

EP 4 648 466 A1

FIG. 4

EP 4 648 466 A1

**FIG. 5**

EP 4 648 466 A1

**FIG. 6**

700

FIG. 7

800

Network Graph

GATConv → GATConv → GATConv → Global Mean Pooling → Network Embedding → Predicted KPI(s)

**FIG. 8**

EP 4 648 466 A1

**FIG. 9**

1000

EP 4 648 466 A1

```
┌─────────────────┐          ╭─────────────╮          ┌─────────────────┐
│ Network Test    │          │   Network   │          │    Device       │
│    Device       │   ⟍⟋     │    1006     │   ⟍⟋     │    1004         │
│     1002        │          ╰─────────────╯          │                 │
└─────────────────┘                                   └─────────────────┘
```

**FIG. 10**

1100

Bus
1110

Processor

1120

Memory

1130

Input
Component

1140

Output
Component

1150

Communication
Component

1160

**FIG. 11**

EP 4 648 466 A1

1200 →

| 1210 | Obtain, by a network test device, a labeled dataset based on a radio access network intelligent controller (RIC) test simulation |

| 1220 | Generate, by the network test device, an artificial intelligence or machine learning (AI/ML) model that is trained using the labeled dataset |

| 1230 | Receive, via a user interface of the network test device, a network configuration associated with a user application deployed on an RIC |

| 1240 | Predict, using the AI/ML model running on the network test device, a key performance indicator (KPI) based on the network configuration |

| 1250 | Provide, via the user interface of the network test device, an indication of the KPI |

**FIG. 12**

# EUROPEAN SEARCH REPORT

**Application Number**

EP 25 17 4800

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | UPADHYAYA PRATHEEK S ET AL: "Open AI Cellular (OAIC): An Open Source 5G O-RAN Testbed for Design and Testing of AI-Based RAN Management Algorithms", IEEE NETWORK, IEEE SERVICE CENTER, NEW YORK, NY, US, vol. 37, no. 5, 5 October 2023 (2023-10-05), pages 7-15, XP011961512, ISSN: 0890-8044, DOI: 10.1109/MNET.2023.3320933 [retrieved on 2023-10-06] | 1,3, 7-11,16 | INV. H04W24/06 |
| Y | * page 3 - page 5; figures 1, 4 * | 2,4-6, 12-15 | |
| A | MICHELE POLESE ET AL: "ColO-RAN: Developing Machine Learning-based xApps for Open RAN Closed-loop Control on Programmable Experimental Platforms", ARXIV.ORG, CORNELL UNIVERSITY LIBRARY, 201 OLIN LIBRARY CORNELL UNIVERSITY ITHACA, NY 14853, 17 December 2021 (2021-12-17), XP091117985, * page 12; figure 2 * | 1-16 | TECHNICAL FIELDS SEARCHED (IPC) H04W |
| X | PEIZHENG LI ET AL: "RLOps: Development Life-cycle of Reinforcement Learning Aided Open RAN", ARXIV.ORG, CORNELL UNIVERSITY LIBRARY, 201 OLIN LIBRARY CORNELL UNIVERSITY ITHACA, NY 14853, 25 November 2022 (2022-11-25), XP091377214, DOI: 10.1109/ACCESS.2022.3217511 * page 11; figure 5 * | 1,11 | |

-/--

The present search report has been drawn up for all claims

| Place of search | Date of completion of the search | Examiner |
|---|---|---|
| Munich | 29 August 2025 | Tessier, Serge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

| | | Europäisches Patentamt<br>European Patent Office<br>Office européen des brevets | **EUROPEAN SEARCH REPORT** | **Application Number**<br>EP 25 17 4800 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/407664 A1 (WANG YUE [GB] ET AL) 22 December 2022 (2022-12-22) * paragraph [0089] * | 2,4-6, 12-15 | |
| A | WO 2024/072441 A1 (RAKUTEN MOBILE INC [JP]; RAKUTEN MOBILE USA LLC [US]) 4 April 2024 (2024-04-04) * paragraph [0114] - paragraph [0121]; figure 5 * | 1-16 | |
| A | MD ARAFAT HABIB ET AL: "Intent-driven Intelligent Control and Orchestration in O-RAN Via Hierarchical Reinforcement Learning", ARXIV.ORG, CORNELL UNIVERSITY LIBRARY, 201 OLIN LIBRARY CORNELL UNIVERSITY ITHACA, NY 14853, 6 July 2023 (2023-07-06), XP091556545, * page 1 * | 1-16 | |

**TECHNICAL FIELDS SEARCHED (IPC)**

The present search report has been drawn up for all claims

| Place of search | Date of completion of the search | Examiner |
|---|---|---|
| Munich | 29 August 2025 | Tessier, Serge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 4800

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2025

| Patent document cited in search report | | Publication date | Patent family member(s) | | Publication date |
|---|---|---|---|---|---|
| US 2022407664 | A1 | 22-12-2022 | EP | 4353024 A1 | 17-04-2024 |
| | | | GB | 2608268 A | 28-12-2022 |
| | | | US | 2022407664 A1 | 22-12-2022 |
| | | | US | 2025254016 A1 | 07-08-2025 |
| | | | WO | 2022260459 A1 | 15-12-2022 |
| WO 2024072441 | A1 | 04-04-2024 | JP | 2025521249 A | 08-07-2025 |
| | | | US | 2024259836 A1 | 01-08-2024 |
| | | | WO | 2024072441 A1 | 04-04-2024 |

For more details about this annex : see Official Journal of the European Patent Office, No. 12/82